# EUROPEAN PATENT APPLICATION

(11) **EP 4 793 730 A1**
(43) Date of publication of application: **19.08.2026**
(21) Application number: 25221203.0
(22) Date of filing: 05.12.2025
(51) Int. Cl.: G05D 1/644, G05D 1/245, G05D 1/648, G05D 1/246, G05D 1/248, A01D 34/00, G06N 20/00, G05D 107/20, G05D 105/15, G05D 101/15, G05D 109/10

(54) **IMPROVED SCHEDULING OF OPERATION FOR A ROBOTIC LAWNMOWER**

(30) Priority: 18.02.2025 SE 2550152
(71) Applicant: Husqvarna AB, 561 82 Huskvarna (SE)
(72) Inventor: Alexiusson, Mikael, 561 82 Huskvarna (SE); Liljedahl, Marcus, 561 82 Huskvarna (SE); Fröling, Douglas, 561 82 Huskvarna (SE); Liljedahl, Dan, 561 82 Huskvarna (SE); Ärlig, Ulf, 561 82 Huskvarna (SE); Axell, Philip, 561 82 Huskvarna (SE)

(57) **Abstract**

A method for use in robotic lawnmower system comprising a robotic lawnmower (100) arranged to operate in an outdoor operational area (205), and the robotic lawnmower comprising controller (110), a memory (120), a navigation sensor (175), one or more sensors (180, 185), the memory (120) being configured to store a map application (120A) and to store data regarding sensor readings, and wherein the method comprises causing the robotic lawnmower (100) to traverse the operational area, and while doing so receiving sensor readings causing a data model of the operational area to be generated based on the stored sensor readings and causing an artificial intelligence scheduling module to be trained on the data model according to one or more operating criteria whereby the artificial intelligence scheduling module is trained to schedule operation of the robotic lawnmower in the operational area based on the sensor readings and with the aim of fulfilling the one or more operating criteria

## Description

### TECHNICAL FIELD

This application relates to a robotic lawnmower and a method for providing an improved scheduling, and in particular to a robotic lawnmower and a method for providing an improved scheduling for a specific operational area.

### BACKGROUND

Automated or robotic lawnmowers are becoming increasingly more popular and so is the use of the robotic lawnmower in various types of operational areas, such as gardens. The customers are demanding more and more advanced functionality while at the same time also requiring to not be disturbed by the operation of the robotic lawnmower. In order to meet these customer requirements, various Artificial Intelligence, AI, components are introduced to robotic lawnmowers, such as AI scheduling modules for object recognition, which help in ensuring that the robotic lawnmower is able to handle various different objects as per a user's requirement. Such AI scheduling modules are trained by the manufacturer - or at least by the provider of the AI scheduling module, and as is known AI training is quite time consuming so this is done prior to delivery of the AI scheduling module.

There are also software solutions that enable a robotic lawnmower to "learn" a specific operating area. In this prior art context the terminology of "learning" is confusing as it actually means to register or record the positions of various objects, and store their corresponding locations so that the robotic lawnmower can operate accordingly, and also so that work can be planned according to specific rules, such that a slope should not be traversed in a specific direction (up/down) to avoid slipping. Such prior art "learning" is done by the robotic lawnmower being navigated (controlled or autonomously) around the operating area in order to note the various locations. Some prior art robotic lawnmowers are designed to update registered coordinates during continued operation if it is noted that the coordinates noted in for example a map do not correspond to coordinates detected during operation.

### SUMMARY

As noted above, the rules that a robotic lawnmower's work is planned around are defined in general and applies equally to all operating areas. However, as the inventors have realized, all operating areas are not the same, and conditions that may seem to be the same, may actually vary quite a lot within an area that a robotic lawnmower is being sold. The inventors have therefore realized that such scheduling is not optimal, and are proposing an improved manner of training a robotic lawnmower that utilizes the strength in adaptability of an AI system while not being encumbered by the general rules specified by a manufacturer.

According to one aspect there is provided, as per the appended claims, a robotic lawnmower system comprising a robotic lawnmower arranged to operate in an outdoor operational area, and the robotic lawnmower comprising controller, a memory, a navigation sensor, one or more sensors, the memory being configured to store a map application and to store data regarding sensor readings, and wherein the controller is configured to cause the robotic lawnmower to traverse the operational area, and while doing so receive sensor readings from the one or more sensors and receive sensor readings from the navigation sensor and store these sensor readings, cause a data model of the operational area to be generated based on the stored sensor readings, obtain one or more operating criteria, cause an artificial intelligence scheduling module to be trained on the data model according to the one or more operating criteria whereby the artificial intelligence scheduling module is trained to schedule operation of the robotic lawnmower in the operational area based on the sensor readings and with the aim of fulfilling the one or more operating criteria, wherein the artificial intelligence scheduling module is trained to provide an operating pattern that satisfies the one or more operating criteria, and then to operate according to the operating pattern provided by the artificial intelligence scheduling module.

In some embodiments, the controller is configured to determine positions based on the sensor readings from the navigation sensor and store the sensor readings from the sensors along with the determined positions in the map application whereby sensor readings at various positions are stored in the map application, and to cause the data model of the operational area to be generated based on the stored sensor readings at various positions in the map application.

In some embodiments, the artificial intelligence scheduling module is trained based on re-enforcement learning.

In some embodiments, the controller is further configured to store new sensor data and update the map application accordingly, cause the data model of the operational area to be updated based on the updated map application, and cause the artificial intelligence scheduling module to be updated by causing the artificial intelligence scheduling module to be trained based on the updated map application.

In some embodiments, the controller is further configured to determine that the artificial intelligence module has been in use by the robotic lawnmower for a time exceeding a time threshold and in response thereto cause the artificial intelligence scheduling module to be updated.

In some embodiments, the controller is further configured to determine that an operating criteria has not been met during operation and in response thereto cause the artificial intelligence scheduling module to be updated.

In some embodiments, the controller is further configured to determine that a weather condition has changed and in response thereto cause the artificial intelligence scheduling module to be updated.

In some embodiments, the controller is further configured to determine that the weather condition has changed based on the received sensor readings.

In some embodiments, the controller is further configured to cause the data model of the operational area to be generated based on the stored sensor readings at various positions in the map application by generating the data model of the operational area based on the stored sensor readings at various positions in the map application.

In some embodiments, the controller is further configured to cause the artificial intelligence scheduling module to be trained on the data model according to the one or more operating criteria by training an AI model in the AI scheduling module.

In some embodiments, the robotic lawnmower system is operably connected to a server and wherein the controller is further configured to cause the artificial intelligence scheduling module to be trained on the data model according to the one or more operating criteria by uploading the data model to the server whereby an AI model in the AI scheduling module is trained by the server.

In some embodiments, the robotic lawnmower system is operably connected to a server and wherein the controller is further configured to cause the data model of the operational area to be generated based on the stored sensor readings at various positions in the map application by uploading the sensor readings at various positions to the server whereby the data model is generated by the server.

In some embodiments, the controller is further configured to cause the artificial intelligence scheduling module to be trained on the data model according to the one or more operating criteria by the server also training an artificial intelligence model in the artificial intelligence scheduling module based on the obtained data model according to the one or more operating criteria.

In some embodiments, the controller is further configured to cause the artificial intelligence scheduling module to be trained on the data model according to the one or more operating criteria by obtaining the data model generated by the server and then training an artificial intelligence model in the artificial intelligence scheduling module based on the obtained data model according to the one or more operating criteria.

In some embodiments, the controller is further configured to obtain at least one operating criterium as default operating criterium

In some embodiments, the controller is further configured to obtain at least one operating criterium as from a user, as a user operating criterium.

In some embodiments, the operating criterium relates to operating time, and wherein the artificial intelligence scheduling module comprises a time optimizing module.

In some embodiments, the operating criterium relates to grass quality, and wherein the artificial intelligence scheduling module comprises a grass quality optimizing module.

In some embodiments, the grass quality relates to one or more of grass wear, robustness of grass, and resistance to dryness.

According to one aspect there is provided, as per the appended claims, a method for use in robotic lawnmower system comprising a robotic lawnmower arranged to operate in an outdoor operational area, and the robotic lawnmower comprising controller, a memory, a navigation sensor, one or more sensors, the memory being configured to store a map application and to store data regarding sensor readings, and wherein the method comprises causing the robotic lawnmower to traverse the operational area, and while doing so receiving sensor readings from the one or more sensors and receive sensor readings from the navigation sensor and storing these sensor readings in the map application, causing a data model of the operational area to be generated based on the stored sensor readings in the map application, obtaining one or more operating criteria, causing an artificial intelligence scheduling module to be trained on the data model according to the one or more operating criteria whereby the artificial intelligence scheduling module is trained to schedule operation of the robotic lawnmower in the operational area based on the sensor readings and with the aim of fulfilling the one or more operating criteria, wherein the artificial intelligence scheduling module is trained to provide an operating pattern that satisfies the one or more operating criteria, and then operating according to the operating pattern provided by the artificial intelligence scheduling module.

According to one aspect there is provided, as per the appended claims, a computer-readable medium carrying computer instructions that when loaded into and executed by a controller of a robotic lawnmower enables the robotic lawnmower to implement the method according to teachings herein.

According to one aspect there is provided, as per the appended claims, a computer-readable medium carrying computer instructions that when loaded into and executed by a controller of a server enables the server to implement the method according to teachings herein.

Further embodiments and aspects are as in the attached patent claims and as discussed in the detailed description.

Other features and advantages of the disclosed embodiments will appear from the following detailed disclosure, from the attached dependent claims as well as from the drawings. Generally, all terms used in the claims are to be interpreted according to their ordinary meaning in the technical field, unless explicitly defined otherwise herein. All references to "a/an/the [element, device, component, means, step, etc.]" are to be interpreted openly as referring to at least one instance of the element, device, component, means, step, etc., unless explicitly stated otherwise. The steps of any method disclosed herein do not have to be performed in the exact order disclosed, unless explicitly stated.

### BRIEF DESCRIPTION OF THE DRAWINGS

The invention will be described in further detail under reference to the accompanying drawings in which:
Figure 1 shows a schematic view of the components of an example of a robotic lawnmower according to some example embodiments of the teachings herein;
Figure 2 shows a schematic view of a robotic lawnmower system according to some example embodiments of the teachings herein;
Figure 3 shows a schematic view of a data model according to some example embodiments of the teachings herein;
Figure 4 shows a schematic view of a re-enforcement learning system;
Figure 5 shows a corresponding flowchart for a method according to some example embodiments of the teachings herein; and
Figure 6 shows a schematic view of a computer-readable medium carrying computer instructions that when loaded into and executed by a controller of a robotic work tool, enables the robotic work tool to implement some embodiments according to the teachings herein.

### DETAILED DESCRIPTION

The disclosed embodiments will now be described more fully hereinafter with reference to the accompanying drawings, in which certain embodiments of the invention are shown. This invention may, however, be embodied in many different forms and should not be construed as limited to the embodiments set forth herein. Like reference numbers refer to like elements throughout.

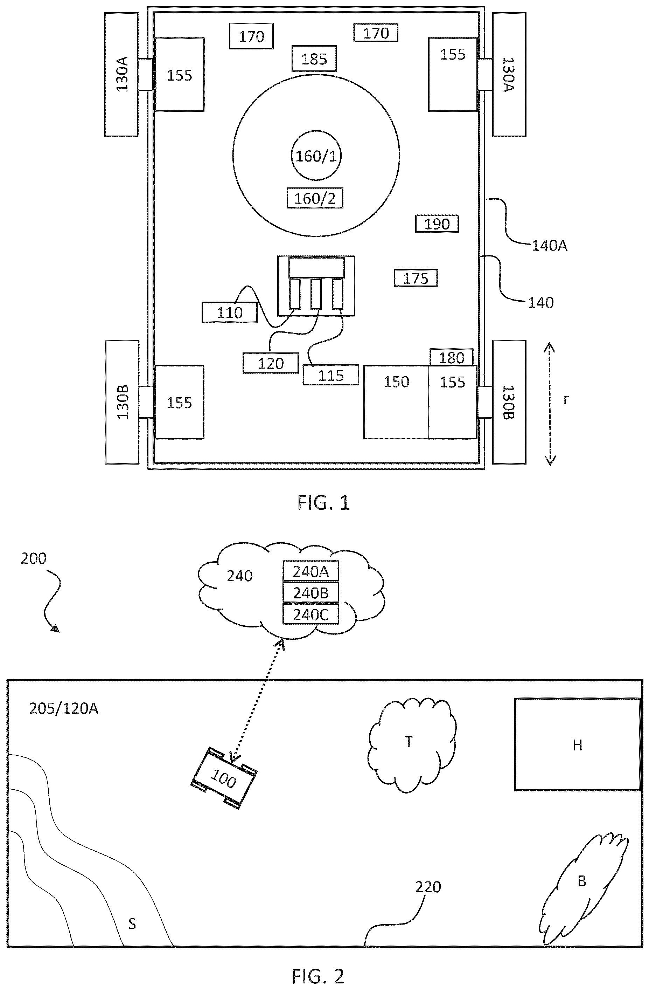

Figure 1 shows a schematic overview of a robotic lawnmower 100. The robotic lawnmower 100 may be a multi-chassis type or a mono-chassis type (as in figure 1). A multi-chassis type comprises more than one main body parts that are movable with respect to one another. A mono-chassis type comprises only one main body part.

It should be noted that robotic lawnmower may be of different sizes, where the size ranges from merely a few decimetres for small garden robots, to even more than 1 meter for large robots arranged to service for example airfields.

It should also be noted that the robotic lawnmower is a self-propelled robotic lawnmower, capable of autonomous navigation within an outdoor operational area, where the robotic lawnmower propels itself across or around the outdoor operational area in a pattern (random or predetermined).

The robotic lawnmower 100 has a main body part 140, possibly comprising a chassis 140 and an outer shell 140A, and a plurality of wheels 130 (in this example four wheels 130, but other number of wheels are also possible, such as three or six).

The main body part 140 substantially houses all components of the robotic lawnmower 100. At least some of the wheels 130 are drivably connected to at least one electric motor 155 powered by a battery 150. It should be noted that even if the description herein is focused on electric motors, combustion engines may alternatively be used, possibly in combination with an electric motor. In the example of figure 1, each of the wheels 130 is connected to a common or to a respective electric motor 155 for driving the wheels 130 to navigate the robotic lawnmower 100 in different manners. The wheels, the motor 155 and possibly the battery 150 are thus examples of components making up a propulsion device. By controlling the motors 155, the propulsion device may be controlled to propel the robotic lawnmower 100 in a desired manner, and the propulsion device will therefore be seen as synonymous with the motor(s) 150. It should be noted that wheels 130 driven by electric motors is only one example of a propulsion system and other variants are possible such as caterpillar tracks.

The robotic lawnmower 100 also comprises a controller 110 and a computer readable storage medium or memory 120. The controller 110 may be implemented using instructions that enable hardware functionality, for example, by using executable computer program instructions in one or more general-purpose or special-purpose processors that may be stored on the memory 120 to be executed by such a processor. The controller 110 is configured to read instructions from the memory 120 and execute these instructions to control the operation of the robotic lawnmower 100 including, but not being limited to, the propulsion and navigation of the robotic lawnmower.

The controller 110 in combination with the electric motor 155 and the wheels 130 forms the base of a navigation system (possibly comprising further components) for the robotic lawnmower, enabling it to be self-propelled as discussed.

The controller 110 may be implemented using one or more processing devices, such as any suitable, available processor or Programmable Logic Circuit (PLC). The memory 120 may be implemented using any commonly known technology for computer-readable memories such as ROM, FLASH, DDR, or some other memory technology.

The robotic lawnmower 100 is further arranged with one or more wireless communication interfaces 115 for communicating with other devices, such as a server, a personal computer, a smartphone, the charging station, and/or other robotic lawnmowers. Examples of such wireless communication devices are Bluetooth^{®}, WiFi^{®} (IEEE802.11b), Global System Mobile (GSM) and LTE (Long Term Evolution), to name a few. The robotic lawnmower 100 may be arranged to communicate with a user equipment (not shown but will be regarded as being an example of a server, as an example of a connected device) as discussed in relation to figure 2 below for providing information regarding status, location, and progress of operation to the user equipment as well as receiving commands or settings from the user equipment. Alternatively or additionally, the robotic lawnmower 100 may be arranged to communicate with a server (referenced 240 in figure 2) for providing information regarding status, location, and progress of operation as well as receiving commands or settings. In some embodiments the robotic lawnmower system is operably connected to such a sever, and where the server may be utilized to offload some processing from the robotic lawnmower, for example the generation of the data model and/or training of the artificial intelligence scheduling module, as will be discussed in the below. In some such embodiments, the server may be seen as (functionally) comprised in the robotic lawnmower system.

The robotic lawnmower 100 also comprises a work tool 160, which in the example of the robotic lawnmower 100 is one or more grass cutting devices 160, such as a rotating blade 160/2 driven by a cutter motor 160/1.

For enabling the robotic lawnmower 100 to navigate with reference to a wire, such as a boundary wire or a guide wire, emitting a magnetic field caused by a control signal transmitted through the wire, the robotic lawnmower 100 is, in some embodiments, configured to have at least one magnetic field sensor 170 arranged to detect the magnetic field and for detecting the wire and/or for receiving (and possibly also sending) information to/from a signal generator. In some embodiments, such a magnetic boundary is used to provide a border (not shown explicitly in figure 2, but deemed to be included in the boundary 220) enclosing an outdoor operational area (referenced 205 in figure 2).

In some embodiments the robotic lawnmower 100 comprises a satellite signal navigation sensor 175 configured to provide navigational information (such as position) based on receiving one or more signals from a satellite - possibly in combination with receiving a signal from a base station. In some embodiments the satellite navigation sensor is a GPS (Global Positioning System) device or other Global Navigation Satellite System (GNSS) device. In some embodiments the satellite navigation sensor 175 is a RTK sensor. This enables the robotic lawnmower to operate in an outdoor operational area bounded by a virtual border (not shown explicitly in figure 2 but deemed to be included in the boundary 220 irrespective whether a physical boundary is used or not).

The robotic lawnmower 100 also comprises deduced reckoning sensors 180. The deduced reckoning sensors may be odometers, accelerometers or other deduced reckoning sensors. In some embodiments, the robotic lawnmower comprises a visual odometery sensor 185, possibly comprised in or connected to the deduced reckoning sensors 180.

In some embodiments, robotic lawnmower 100 also comprises environmental sensors 190, such as moisture sensors, temperature sensors, humidity sensors, weather sensors, to name a few.

In some embodiments, the deduced reckoning sensors are comprised in the propulsion device, wherein a deduced reckoning navigation may be provided by knowing the current supplied to a motor and the time the current is supplied, which will give an indication of the speed and thereby distance for the corresponding wheel.

The deduced reckoning sensors 180, especially in combination with the visual odometry sensor 185, enables the robotic lawnmower to operate according to a map of the outdoor operational area. In some such embodiments, the navigation is based on SLAM, and in some embodiments, where a visual odometry sensor (such as a camera) 185 is utilized, the navigation is based on V-SLAM.

The robotic lawnmower 100 is in some embodiments arranged to operate according to a map application (indicated in figure 2 and referenced 120A) representing one or more operational areas (and possibly the surroundings of the outdoor operational area(s)) as well as features of the outdoor operational area(s) stored in the memory 120 of the robotic lawnmower 100. In some embodiments, the map is also or alternatively stored in the memory of a server (referenced 240 in figure 2). The map application may be generated or supplemented as the robotic lawnmower 100 operates or otherwise moves around in the outdoor operational area. In some embodiments, the map application is downloaded, possibly from the server. In some embodiments, the map application also includes one or more transport areas. The robotic lawnmower 100 is arranged to navigate according to the map based on the deduced reckoning sensors 180.

In some embodiments the robotic lawnmower is arranged or configured to traverse and operate in outdoor operational areas that are not essentially flat, but contain terrain that is of varying altitude, such as undulating, comprising hills or slopes or such. The ground of such terrain is not flat and it is not straightforward how to determine an angle between a sensor mounted on the robotic lawnmower and the ground. The robotic lawnmower is also or alternatively arranged or configured to traverse and operate in an outdoor operational area that contains obstacles that are not easily discerned from the ground. Examples of such are grass or moss-covered rocks, roots or other obstacles that are close to ground and of a similar colour or texture as the ground.

The robotic lawnmower is also or alternatively arranged or configured to traverse and operate in an outdoor operational area that contains obstacles that are overhanging, i.e. obstacles that may not be detectable from the ground up, such as low hanging branches of trees or bushes. Such a garden is thus not simply a flat lawn to be mowed or similar, but an outdoor operational area of unpredictable structure and characteristics. The outdoor operational area exemplified with referenced to figure 2, may thus be such a non-uniform operational area as disclosed in this paragraph that the robotic lawnmower is arranged to traverse and/or operate in.

The visual sensor 185, the deduced reckoning sensors 180, the environmental sensors 190 and also by sensing or determining the load on the cutter blade 160/2 by monitoring the current drawn by the cutter motor 160/1 (in order to determine grass wetness, grass height and/or grass thickness) can all be utilized as sensors to provide sensor data readings on the current operating conditions at a specific location, the location or position determined utilizing the navigation sensor (such as the satellite navigation sensor, (V)SLAM sensors, and/or the deduced reckoning sensors).

Figure 2 shows a robotic lawnmower system 200 in some embodiments. The schematic view is not to scale. The robotic lawnmower system 200 comprises one or more robotic lawnmowers 100 according to the teachings herein arranged to operate in one or more outdoor operational areas 205 possibly bounded by a boundary 220. It should be noted that the outdoor operational area 205 shown in figure 2 is simplified for illustrative purposes.

The view of the outdoor operational area 205 is also intended to be an illustration or graphical representation of the map application 120A discussed in the above.

A server 240 is shown as an optional connected device for the robotic lawnmower 100 to communicate with - possibly for receiving maps or map updates, for generating data models and/or for training artificial intelligence modules. The server 240 comprises a controller 240A for controlling the operation of the server 240, a memory 240B for storing instructions and data relating to the operation of the server 240 and a communication interface 240C for enabling the server 240 to communicate with other entities, such as the robotic lawnmower 100, and/or a User Equipment such as a mobile phone. The controller, the memory and the communication interface may be of similar types as discussed in relation to figure 1 for the robotic lawnmower 100.

As is shown in figure 2 there may be obstacles such as houses (H), structures, trees (T), bushes (B) to mention a few examples in the outdoor operational area 205. In figure 2 such obstacles are indicated and referenced H (as in house). There may also be one or more irregularities in the surface of the outdoor operational area, which are exemplified in figure 2 as a slope S.

It should be noted that any processing may be done in any, some or all of the controller 110 of the robotic lawnmower 100 and/or the controller 240A of the server 240 and that the processing may also be done partially in one controller 110/240A for supplemental processing in the other controller 110/240A. This is indicated in figure 2 in that a dashed arrow is shown between the server 240 and the robotic lawnmower 100 for indicating that information may be passed freely between them for (partial) processing.

As discussed in the above, the inventors have realized that by storing sensor readings for the specific operational area and to build or generate a data model of the operational area based on the sensor readings and the positions where the sensor readings were made, an artificial intelligence scheduling module can be trained (locally or remotely) based on that data model. This allows for the robotic lawnmower to properly learn (as opposed to how this term is used correctly in the prior art) how to operate in the specific operating area. The data model may be made based on sensor data gathered during just a few traversals of the operational area, possibly even as few as one traversal. And by utilizing the charging time of the robotic lawnmower, the artificial intelligence scheduling module can be trained without incurring any down time. As the inactive time (including charging time) of a robotic lawnmower is usually larger than the active time of the robotic lawnmower, even the small processing power of the robotic lawnmower can be utilized to train the artificial intelligence scheduling module.

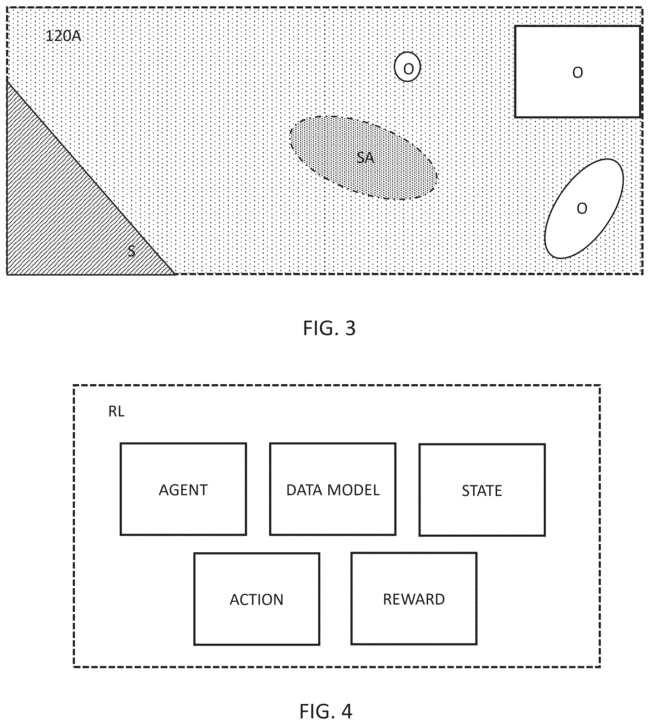

Figure 3 shows a schematic illustration of an example of a data model for the operational area of figure 2. As can be seen, various sensor readings are noted for different positions in the operational area. For example, the slope S may give rise to an area of different sensor readings than for example a wet (or otherwise) slippery area SA in the middle of the operational area. This is indicated by those areas being marked differently. Also, indicated is that according to the teachings herein, an obstacle O may be determined by the area of the obstacle simply not having any sensor readings, which is indicated in figure 3 as the corresponding areas being white. As can be noted, only the tree trunk is indicated, not the entire tree.

There is thus no need for specific object recognition and an object will, in some embodiments, only be represented as a lack of sensor readings. Of course, the obstacles may be detected and noted specifically - through for example collision detection or other obstacle detection as are commonly known in the art, which helps differentiate between areas that have simply not been traversed and areas that are blocked by an obstacle.

The data model thus gives a complete representation of the operational area simply through the sensor readings, and which - as the inventors have realized - is all that the AI model need to be properly trained as the sensor readings, give a realistic view of what the robotic lawnmower actually experiences during operation.

There is thus proposed a robotic lawnmower system comprising one or more robotic lawnmowers 100 as per any embodiment of figure 1, the robotic lawnmower being configured to store to store data regarding sensor readings, possibly in the map application 120A, in its memory 120 The controller 110 is configured to cause the robotic lawnmower 100 to traverse the operational area 220, and while doing so receive sensor readings from one or more sensors 180, 185, 190, for example the deduced reckoning sensor(s) and the environmental sensor(s), and at the same time determine positions based on the navigation sensor 175.

In some embodiments, the sensor readings also include a time of day.

The robotic lawnmower 100 is further configured to store these sensor readings along with the determined positions in the for example the map application 120A whereby sensor readings at various positions are stored in the memory 120. The robotic lawnmower system then causes a data model of the operational area to be generated based on the stored sensor readings at various positions.

The robotic lawnmower system also obtains one or more operating criteria and causes an artificial intelligence scheduling module to be trained on the data model according to the one or more operating criteria whereby the artificial intelligence scheduling module is trained to schedule operation of the robotic lawnmower in the operational area based on the sensor readings and with the aim of fulfilling the one or more operating criteria.

The artificial intelligence scheduling module is thus trained to provide an operating pattern that satisfies the one or more operating criteria. For example the robotic lawnmower may take a longer time to traverse the operational area if a first pattern is used than if a second pattern is used. These patterns may not be obvious, but may - highly likely depend on the conditions of the specific operational area. For example, the operational area may include an area that is wet from dew in the morning so this area may be served faster if served later in the day, than in the morning. This is something that could be noticed based on sensor readings, which may not be apparent - or at least very difficult to define - based on general rules applicable to all operational areas.

In some embodiments the navigation sensor is used to determine positions as discussed above, whereby the positions are stored along with the sensor data. IN some embodiments, the sensor readings from the navigation sensor are stored along with the other sensor readings, partially processed or unprocessed, where the processing to determine a position can be made subsequently, when other data, such as data from for example a magnetic field, can be used to increase the accuracy of the determined position.

The robotic lawnmower then operates according to the operating pattern provided by the artificial intelligence scheduling module.

This allows for a cost-effective training for a specific operational area only requiring a minimum of traversal, and which allows for a tailored scheduling specific to the given operational area.

In some embodiments the artificial intelligence scheduling module is trained based on re-enforcement learning.

Reinforcement Learning (RL) is a type of machine learning where an agent learns to make decisions by interacting with an environment to achieve a specific goal. Unlike supervised learning, which relies on labeled data, RL focuses on learning through trial and error, using feedback from its actions to improve performance over time. According to the present invention, the agent will operate virtually within the data model, taking actions based on a policy-a strategy that defines the agent's behavior. The policy being defined by the operating criteria. After each action, the agent receives feedback in the form of a reward, which is a numerical value that indicates how beneficial the action was toward achieving the goal. The agent's objective is to maximize the cumulative reward over time.

Figure 4 shows core components of a RL system. The RL system comprises an agent, which acts as the learner or decision-maker. The RL module also comprises an environment module, which in the teachings herein is given by the data model of the operational area, with which the agent interacts. The RL system also comprises a State module comprising a representation of the current situation of the environment and an Action module which comprises a collection of choices the agent can make. The RL system also comprises a Reward module that generates feedback that evaluates the outcome of an action in the data module.

RL algorithms can be categorized into Model-based RL (The agent builds a model of the environment to plan its actions) and Model-free RL(the agent learns directly from interactions without an explicit model). Herein a Model-based RL is used.

Popular RL techniques include: Q-Learning: A value-based method where the agent learns the expected rewards of actions in specific states. Policy Gradient Methods: Directly optimize the policy that maps states to actions. Deep Reinforcement Learning: Combines RL with deep neural networks to handle complex environments, as seen in applications like AlphaGo.

The operating pattern provided by the artificial intelligence scheduling module includes one or more of a path to follow and a time of day to follow (portions) of the path. The pattern may divide the operational area into sections, where different sections are processed differently (different adaptations of operation) and/or at different times of day.

A robotic lawnmower may adapt its operation by adapting the speed of the wheels, the direction of travel (for example reversing through slippery sections or down hill), the load on/speed of the cutter, turning radii (steeper turning adds to the wear of the grass) to mention a few possible adaptations.

The artificial intelligence scheduling - or rather the AI model therein - will thus be trained to adapt the operation and the path and optionally the time of day in order to meet the operating criteria.

In some embodiments, the robotic lawnmower system is configured to obtain at least one operating criterium as default operating criterium, wherein one or more operating criterium are stored as (default) criteria in the memory of the robotic lawnmower and/or the server. In some embodiments, the default operating criterium is to reduce time of operation.

In some embodiments, the robotic lawnmower system is configured to obtain at least one operating criterium as from a user, as a user operating criterium. Whereby the user can input what criteria the user finds important, possibly replacing the default criteria or supplementing the criteria. As a new criteria is input (or the operating criteria are otherwise changed), the robotic lawnmower system is configured to retrain the artificial intelligence scheduling module.

In some embodiments, one operating criterium relates to operating time, and the artificial intelligence scheduling module then comprises a time optimizing module.

In some embodiments, one operating criterium relates to grass quality, and the artificial intelligence scheduling module comprises a grass quality optimizing module. Grass quality may relate to one or more of grass wear, robustness of grass, and resistance to dryness.

To determine the robustness of grass in a lawn automatically, a combination of sensors, imaging technologies, and data analysis techniques can be employed. Some example of sensors include: Multispectral and Hyperspectral Imaging: cameras capture data in different light spectrums to assess chlorophyll content, water stress, and overall plant health, Normalized Difference Vegetation Index (NDVI): A common metric derived from multispectral data to evaluate vegetation health, RGB Image Analysis: Machine learning algorithms can analyze color, texture, and uniformity to detect signs of stress, disease, or poor growth. The grass robustness is, in some embodiments, determined based on Soil Moisture Sensors, which can be used to monitor water availability, which directly affects grass health. The grass robustness is, in some alternative or additional embodiments, determined based on Temperature and Humidity Sensors, which can be used to track environmental conditions that influence growth. The grass robustness is, in some alternative or additional embodiments, determined based on Soil pH and Nutrient Sensors, which can be used to provide insights into soil health, which affects grass robustness.

The robotic lawnmower system may also, or additionally, in some embodiments be configured to update the artificial intelligence scheduling module. During operation the controller is further configured to store new sensor data and update the map application accordingly. Based on the new data - or updated data - the data model of the operational area can also be updated. It should be noted that "update" herein also includes supplementing so data need not be replaced by new data, but can be supplemented with the new data, for example sensor readings for the same position but at different times of the day. The artificial intelligence scheduling module can then be updated by being trained based on the updated map application 120A.

In some embodiments, the robotic lawnmower system is further configured to determine that the artificial intelligence module has been in use by the robotic lawnmower for a time exceeding a time threshold and in response thereto cause the artificial intelligence scheduling module to be updated. This ensures that the AI is updated regularly, and that the AI model is not trained on old data.

In some embodiments, the robotic lawnmower system is further configured to determine that an operating criteria has not been met during operation and in response thereto cause the artificial intelligence scheduling module to be updated. This provides a fault check, where the AI is retrained when not (longer) performing as desired, thereby being able to adapt to changing conditions - and/or better improve the training.

In some embodiments, the robotic lawnmower system is further configured to determine that a weather condition has changed and in response thereto cause the artificial intelligence scheduling module to be updated. In some embodiments, the robotic lawnmower system is further configured to determine that the weather condition has changed based on the received sensor readings.

As mentioned above, the controller of the robotic lawnmower and the controller of the server may both be utilized to perform some or all of the processing needed.

In some situations the data model is generated locally by the robotic lawnmower, whereby the controller 110 is further configured to cause the data model of the operational area to be generated based on the stored sensor readings at various positions in the map application 120A by generating the data model of the operational area based on the stored sensor readings at various positions in the map application 120A.

Following such local generation of the data model, the training of the AI may also be local, whereby the controller 110 is further configured to cause the artificial intelligence scheduling module to be trained on the data model according to the one or more operating criteria by training an AI model in the AI scheduling module.

Alternatively, the training may be remote based on a locally determined data model whereby the robotic lawnmower system 200 is operably connected to a server 240 and wherein the controller 110 is further configured to cause the artificial intelligence scheduling module to be trained on the data model according to the one or more operating criteria by uploading the data model to the server whereby an AI model in the AI scheduling module is trained by the server 240.

Similarly, the data model may be generated remotely by the server, the controller 110 is further configured to cause the data model of the operational area to be generated based on the stored sensor readings at various positions in the map application 120A by uploading the sensor readings at various positions to the server 240 whereby the data model is generated by the server 240.

Following such central generation of the data model, the training may also be performed centrally whereby the controller 110 is further configured to cause the artificial intelligence scheduling module to be trained on the data model according to the one or more operating criteria by the server also training an artificial intelligence model in the artificial intelligence scheduling module based on the obtained data model according to the one or more operating criteria.

Alternatively, the AI may be trained locally whereby the controller 110 is further configured to cause the artificial intelligence scheduling module to be trained on the data model according to the one or more operating criteria by obtaining the data model generated by the server 240 and then training an artificial intelligence model in the artificial intelligence scheduling module based on the obtained data model according to the one or more operating criteria.

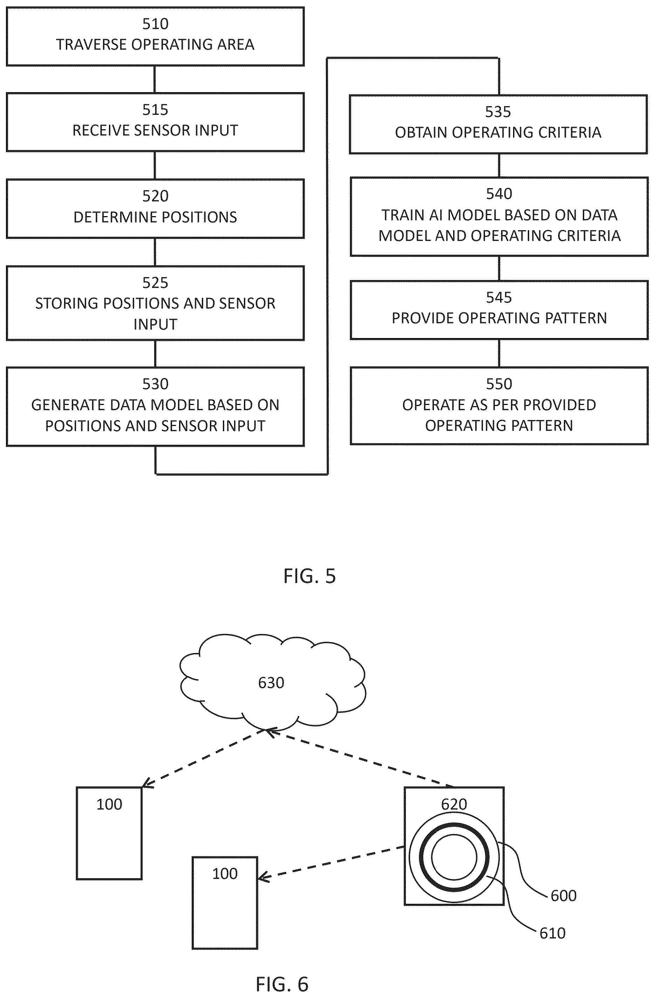

Figure 5 shows a flowchart for a general method according to herein. The method is for use in a robotic lawnmower as in figure 1 in a manner as discussed above in relation to figures 2, 3, and 4, namely for use in a robotic lawnmower system comprising a robotic lawnmower 100 arranged to operate in an outdoor operational area 205 as per above. The method comprises a controller of the robotic lawnmower causing 510 the robotic lawnmower (100) to traverse the operational area, and while doing so receiving 515 sensor readings from the one or more sensors (180, 185) and determining positions 520 based on the navigation sensor (175). The method further comprises storing 525 these sensor readings along with the determined positions in the map application (120A) whereby sensor readings at various positions are stored in the map application (120A). The method further comprises causing 530 a data model of the operational area to be generated based on the stored sensor readings at various positions in the map application (120A) and obtaining 535 one or more operating criteria. The method further comprises then causing 540 an artificial intelligence scheduling module to be trained on the data model according to the one or more operating criteria.

The artificial intelligence scheduling module is thus trained to schedule operation of the robotic lawnmower in the operational area based on the sensor readings and with the aim of fulfilling the one or more operating criteria. The method further comprises the artificial intelligence scheduling module providing 545 an operating pattern that satisfies the one or more operating criteria, and then operating 550 according to the operating pattern provided by the artificial intelligence scheduling module.

Figure 6 shows a schematic view of a computer-readable medium 600 carrying computer instructions 610 that when loaded into and executed by a controller of a robotic work tool 100, enables the robotic work tool 100 to implement the teachings herein. The computer-readable medium 600 may be tangible such as a hard drive or a flash memory, for example a USB memory stick or a cloud server. Alternatively, the computer-readable medium 600 may be intangible such as a signal carrying the computer instructions enabling the computer instructions to be downloaded through a network connection, such as an internet connection. In the example of figure 6, a computer-readable medium 600 is shown as being a hard drive or computer disc 600 carrying computer-readable computer instructions 610, being inserted in a computer disc reader 620. The computer disc reader 620 may be part of a cloud server 630 - or other server - or the computer disc reader 620 may be connected to a cloud server 630 - or other server. The cloud server 630 may be part of the internet or at least connected to the internet. The cloud server 630 may alternatively be connected through a proprietary or dedicated connection. In one example embodiment, the computer instructions are stored at a remote server 630 and be downloaded to the memory 120 of the robotic work tool 100 for being executed by the controller 110.

The computer disc reader 620 may also or alternatively be connected to (or possibly inserted into) a robotic work tool 100 for transferring the computer-readable computer instructions 610 to a controller of the robotic work tool 100 (presumably via a memory of the robotic work tool 100).

Figure 6 shows both the situation when a robotic work tool 100 receives the computer-readable computer instructions 610 via a server connection and the situation when another robotic work tool 100 receives the computer-readable computer instructions 610 through a wired interface. This enables for computer-readable computer instructions 610 being downloaded into a robotic work tool 100 thereby enabling the robotic work tool 100 to operate according to and implement the invention as disclosed herein. The same applies to the sever receiving computer-readable computer instructions 610 thereby enabling the server 240 to operate according to and implement the invention as disclosed herein.

The artificial intelligence scheduling module (and its AI model) is generally consisting of computer-readable computer instructions 610 and may thus be represented by computer-readable computer instructions 610 and/or the memory 120 of the robotic lawnmower 100 or the memory 24B of the server 240.

## Claims

1. A robotic lawnmower system (300) comprising a robotic lawnmower (100) arranged to operate in an outdoor operational area (205), and the robotic lawnmower comprising controller (110), a memory (120), a navigation sensor (175), one or more sensors (180, 185), the memory (120) being configured to store a map application (120A) and to store data regarding sensor readings, and wherein the controller (110) is configured to
cause the robotic lawnmower (100) to traverse the operational area, and while doing so receive sensor readings from the one or more sensors (180, 185) and receive sensor readings from the navigation sensor (175) and
store the sensor readings from the one or more sensors (180, 185) and the sensor readings from the navigation sensor (175) in the memory (120),
cause a data model of the operational area to be generated based on the stored sensor readings,
obtain one or more operating criteria,
cause an artificial intelligence scheduling module to be trained on the data model according to the one or more operating criteria whereby the artificial intelligence scheduling module is trained to schedule operation of the robotic lawnmower (100) in the operational area (205) based on the sensor readings and with the aim of fulfilling the one or more operating criteria, wherein the artificial intelligence scheduling module is trained to provide an operating pattern that satisfies the one or more operating criteria, and then to
operate according to the operating pattern provided by the artificial intelligence scheduling module.

2. The robotic lawnmower system (300) according to claim 1, wherein the controller is configured to determine positions based on the sensor readings from the navigation sensor (175) and
store the sensor readings from the sensors (180, 185) along with the determined positions in the map application (120A) whereby sensor readings at various positions are stored in the map application (120A), and to
cause the data model of the operational area to be generated based on the stored sensor readings at various positions in the map application (120A).

3. The robotic lawnmower system (300) according to claim 1 or 2, wherein the artificial intelligence scheduling module is trained based on re-enforcement learning.

4. The robotic lawnmower system (300) according to any preceding claim, wherein the controller is further configured to
store new sensor data and update the map application accordingly,
cause the data model of the operational area to be updated based on the updated map application (120A), and
cause the artificial intelligence scheduling module to be updated by causing the artificial intelligence scheduling module to be trained based on the updated map application (120A).

5. The robotic lawnmower system (300) according to any preceding claim, wherein the controller is further configured to determine that the artificial intelligence module has been in use by the robotic lawnmower for a time exceeding a time threshold and in response thereto cause the artificial intelligence scheduling module to be updated.

6. The robotic lawnmower system (300) according to claim 5, wherein the controller is further configured to determine that an operating criteria has not been met during operation and in response thereto cause the artificial intelligence scheduling module to be updated.

7. The robotic lawnmower system (300) according to claim 5 or 6, wherein the controller is further configured to determine that a weather condition has changed and in response thereto cause the artificial intelligence scheduling module to be updated.

8. The robotic lawnmower system (300) according to claim 5, 6 or 7, wherein the controller is further configured to determine that the weather condition has changed based on the received sensor readings.

9. The robotic lawnmower system (300) according to any preceding claim, wherein the controller is further configured to cause the data model of the operational area to be generated based on the stored sensor readings at various positions in the map application (120A) by generating the data model of the operational area based on the stored sensor readings at various positions in the map application (120A).

10. The robotic lawnmower system (300) according to claim 9, wherein the controller is further configured to cause the artificial intelligence scheduling module to be trained on the data model according to the one or more operating criteria by training an AI model in the AI scheduling module.

11. The robotic lawnmower system (300) according to claim 9, wherein the robotic lawnmower system (200) is operably connected to a server (240) and wherein the controller (110) is further configured to cause the artificial intelligence scheduling module to be trained on the data model according to the one or more operating criteria by uploading the data model to the server whereby an AI model in the AI scheduling module is trained by the server (240).

12. The robotic lawnmower system (300) according to any of claims 1 to 8, wherein the robotic lawnmower system (200) is operably connected to a server (240) and wherein the controller (110) is further configured to cause the data model of the operational area to be generated based on the stored sensor readings at various positions in the map application (120A) by uploading the sensor readings at various positions to the server (240) whereby the data model is generated by the server (240), and optionally, wherein the controller (110) is further configured to
cause the artificial intelligence scheduling module to be trained on the data model according to the one or more operating criteria by the server also training an artificial intelligence model in the artificial intelligence scheduling module based on the obtained data model according to the one or more operating criteria and/or
to cause the artificial intelligence scheduling module to be trained on the data model according to the one or more operating criteria by
obtaining the data model generated by the server (240) and then
training an artificial intelligence model in the artificial intelligence scheduling module based on the obtained data model according to the one or more operating criteria.

13. The robotic lawnmower system (300) according to any preceding claim, wherein the controller (110) is further configured to obtain at least one operating criterium as default operating criterium and/or to obtain at least one operating criterium as from a user, as a user operating criterium.

14. The robotic lawnmower system (300) according to any preceding claim,
wherein an operating criterium relates to operating time, and wherein the artificial intelligence scheduling module comprises a time optimizing module and/or
wherein an operating criterium relates to grass quality, and wherein the artificial intelligence scheduling module comprises a grass quality optimizing module, and optionally wherein grass quality relates to one or more of grass wear, robustness of grass, and resistance to dryness.

15. A method for use in robotic lawnmower system (300) comprising a robotic lawnmower (100) arranged to operate in an outdoor operational area (205), and the robotic lawnmower comprising controller (110), a memory (120), a navigation sensor (175), one or more sensors (180, 185), the memory (120) being configured to store a map application (120A) and to store data regarding sensor readings, and wherein the method comprises
causing the robotic lawnmower (100) to traverse the operational area, and while doing so receiving sensor readings from the one or more sensors (180, 185) and receive sensor readings from the navigation sensor (175) and
storing the sensor readings from the one or more sensors (180, 185) and the sensor readings from the navigation sensor (175) in the map application (120A),
causing a data model of the operational area to be generated based on the stored sensor readings in the map application (120A),
obtaining one or more operating criteria,
causing an artificial intelligence scheduling module to be trained on the data model according to the one or more operating criteria whereby the artificial intelligence scheduling module is trained to schedule operation of the robotic lawnmower (100) in the operational area based on the sensor readings and with the aim of fulfilling the one or more operating criteria, wherein the artificial intelligence scheduling module is trained to provide an operating pattern that satisfies the one or more operating criteria, and then
operating according to the operating pattern provided by the artificial intelligence scheduling module.
